# EUROPEAN PATENT SPECIFICATION

(11) **EP 2 956 019 B1**
(45) Date of publication and mention of the grant of the patent: **24.07.2019**
(21) Application number: 14751028.3
(22) Date of filing: 14.02.2014
(51) Int. Cl.: A23L 3/01, A23L 3/02, A23B 7/01, H05B 6/78, B65D 81/28

(54) **PROCESSING OF FOOD PRODUCTS WITH VOLUMETRIC HEATING**
VERARBEITUNG VON LEBENSMITTELPRODUKTEN MIT VOLUMETRISCHER ERHITZUNG
TRAITEMENT DE PRODUITS ALIMENTAIRES À L'AIDE D'UN CHAUFFAGE VOLUMÉTRIQUE

(30) Priority: 14.02.2013 US 201361764572 P
(43) Date of publication of application: 23.12.2015
(73) Proprietor: HBC Holding Company, LLC, Raleigh, NC 27601 (US)
(72) Inventor: DRUGA, Michael, Raleigh, North Carolina 27614 (US); CORONEL, Pablo, Apex, North Carolina 27502 (US); DROZD, James Michael, Raleigh, North Carolina 27608 (US)
(74) Representative: Yeadon IP Limited
(86) International application number: PCT/US2014/016456
(87) International publication number: WO 2014/127222

(56) References cited:
- WO-A1-2012/051670
- CA-A- 603 922
- GB-A- 2 098 040
- US-A- 5 122 633
- US-A1- 2003 219 523
- US-A1- 2011 036 246
- US-A1- 2011 111 102
- US-A1- 2011 174 385
- US-A1- 2012 276 272
- US-A1- 2013 034 644
- US-B2- 7 575 770
- US-B2- 8 309 153

## Description

### Background

Consumers enjoy eating various foods for the taste, nutrients, etc. These foods are packaged to be preserved for on-the-go convenience, shipping and storage efficiency, and other reasons. Current processing of foods sometimes overcooks, cooks out the nutrients of the foods and/or destroys the tastes of the food. Additionally, current heating processing of foods is inefficient and requires a great amount of warehouse space and devices. Moreover, some people won't eat food processed using current techniques because the taste of the food is degraded, preservatives must be added or that the foods have lost their nutrient value.

US Patent Application 2011/0174385 describes an in-line method for heat-treating a pumpable food product using microwaves.

US Patent Application 2013/0034644 discloses an in-line heating process for heat treatment of a pumpable food product using an Ohmic sterilizer.

### Summary

Embodiments of the present invention are directed to methods and systems for processing food products that may address the above issues. In accordance with embodiments, a method for processing foods includes providing a food product that may be equally suspended in a solution. The pre-processed food product (e.g., raw food) is processed by rapidly heating the food product and continuously pumping the food solution through the system. The processed food product is then delivered into a flexible package for consumption by a user.

According to one embodiment, a method for continuous processing a food product includes providing a food product and a solution comprising water and at least one thickener other than the chunks of food, the ratio of water to the at least one thickener being selected to allow the food product to be buoyantly suspended in the solution. The food product is mixed with the solution so that the food product is equally distributed in the solution, thereby forming a food solution. The food solution is continuously pumped from e.g. a hopper or container through an electromagnetic or volumetric source, which rapidly heats the food solution using at least one of a microwave generator, an RF source, or an Ohmic source. The processed food solution is then filled in packages, such as flexible pouches.

In one embodiment, backpressure may be applied while the food solution is pumped through the rapid heating process so that the food solution has a higher pressure and thus, a higher boiling point.

The food product comprises food pieces or particulates. The pre-processed food product could be pieces or particulates of fruit, vegetable, protein, meat, dairy-based, and/or any other consumable food. The food pieces or particulates could be in the form of a puree, a particulate, or a combination thereof.

A further embodiment of the invention relates to a food heating and processing system as described in the claims.

dairy-based, and/or any other consumable food. The food pieces or particulates could be in the form of a puree, a particulate, or a combination thereof.

### Description of the Drawings

Figure 1 is a flow chart of an example of a method to process a food solution or other materials in accordance with some embodiments of the present invention.
Figure 2 is a block schematic diagram of an exemplary system of processing a food solution or other materials in accordance with an embodiment of the present invention.
Figure 3 is a flow chart of an example of a method to process food solution or other materials in accordance with some embodiments of the present invention.
Figure 4 is a block schematic diagram of an exemplary system of continuous processing of a food solution using volumetric heating in accordance with some embodiments of the present invention.
Figure 5 illustrates the equal distribution of the food product in a liquid carrier solution according to one embodiment.

### Detailed Description

The present invention is described below with reference to flowchart illustrations and/or block diagrams of methods and systems according to embodiments of the invention. It will be understood that each block of the flowchart illustrations and/or block diagrams, and combinations of blocks in the flowchart illustrations and/or block diagrams, can be implemented by elements of the system. The blocks of the flow chart can be performed in any order and should not be limited to the specific order described herein.

Described herein is a method 100 and system 200 for processing food products or other materials according to some embodiments to produce food products and/or food solutions 300.

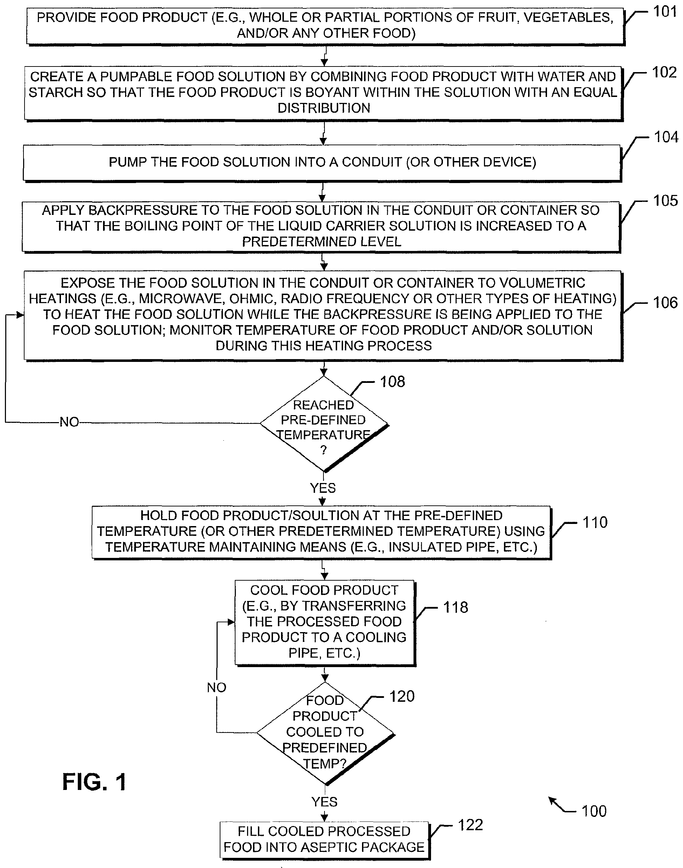

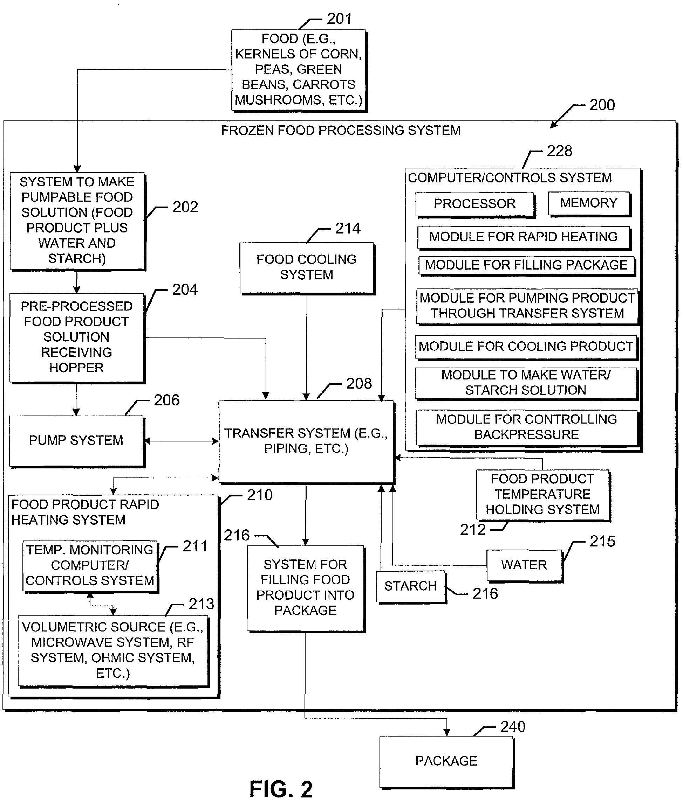

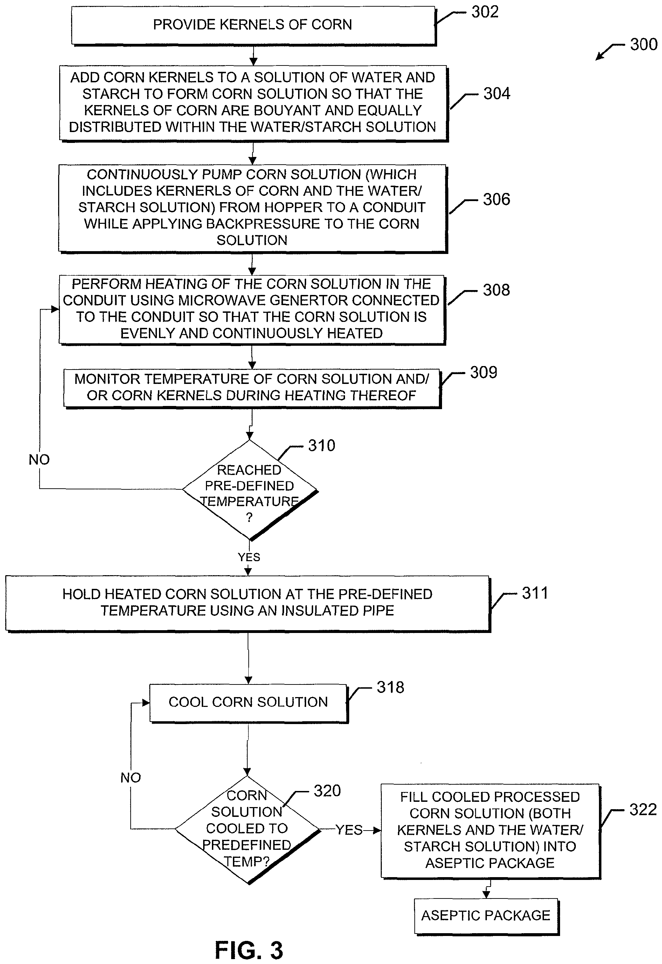

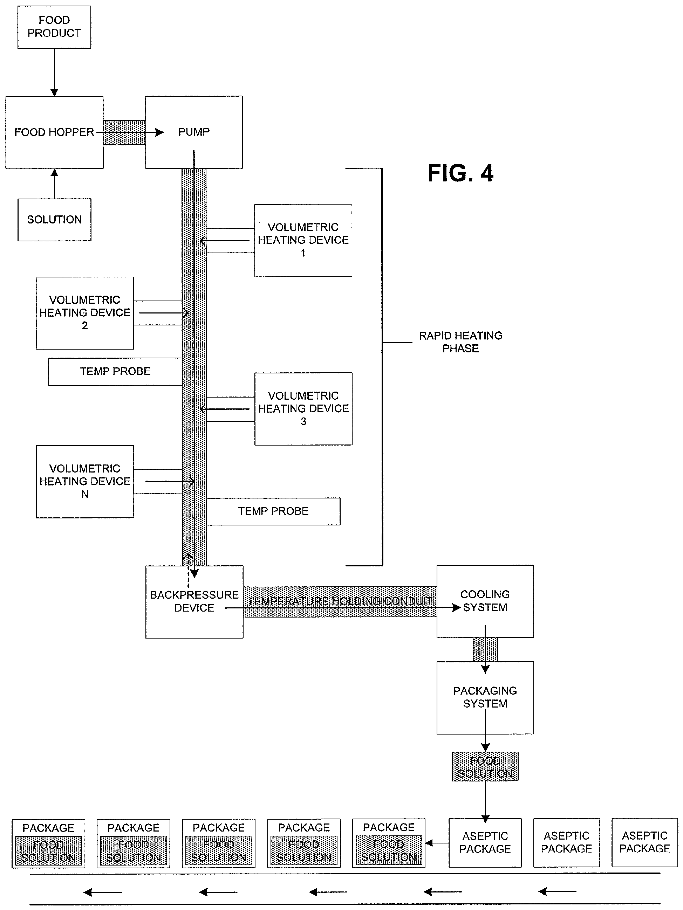

As mentioned above, a food product or solution is continuously processed using volumetric heating and after processing is placed into one or more packages. The process, according to some embodiments, is discussed in more depth in the methods of Figures 1 and 3 and the systems of Figures 2 and 4. However, it should be understood that the elements and steps presented in the Figures and discussed relative thereto should not be so limited to any specific embodiment. Instead, various modifications and substitutions are also possible.

Referring first to Figure 1, Figure 1 is a flow chart of an example of a method to process food or other materials in accordance with some embodiments of the present invention. In block 101, a pre-processed food product is provided to a food processing system 200. This pre-processed food product could be any fruits, vegetables, and/or any consumable food product, or any combination thereof. For example, the food product, as used herein, may be whole kernels of corn, whole green beans, whole peas, mushrooms, carrots, and the like. In this regard, the food product may be raw and fresh fruit and vegetables that have not be processed other than being harvested. The pre-processed food product may contain food piece that may be larger than 0.159 cm (1/16") in cross-sectional diameter. In an embodiment, the pre-processed food product contains a mixture of 0.318-1.91 cm (1/8-3/4") pieces of fruit, vegetable, protein, and/or dairy based and fruit, vegetable, etc. In one embodiment, the pre-processed food product is 1.27 cm (1/2") pieces of vegetables, fruits, and/or other food.

The food product is placed in and therefore suspended in a liquid carrier solution composed of a water and thickener combination. The thickener may be starch in one example and is referred to herein as starch, but it should be known that starch, as referred to herein, may be any thickener. In one embodiment, the liquid carrier solution may be between 0.5% to 2.5% starch to water solution. The liquid carrier solution allows the food product, such as kernels of corn to be equally distributed in the solution. As used herein the term "food solution" refers to a combination of food product (e.g., kernels of corn) submerged in the liquid carrier solution (e.g., water/starch solution).

It should be understood that the liquid carrier need not be limited to a water and starch solution and other solutions may also be used. For example, the liquid carrier may comprise gums, such as cellulose gum, CMC, Xanthan, or any other hydrocolloid or protein.

The food is therefore converted into a pumpable state by adding one or more liquid carriers to the food product. The introduction of liquid carriers allows at least portions of the food product to reach a melting temperature or allows the food product to travel along with a pumpable substance which will act as a lubricant when the food product travels along or through a pipe (or other transfer system). The pumpable state of the food solution allows the food product to be pumped into the pipes (or other transfer means) of the system.

In block 104, the food solution is pumped (by a pump) from a food hopper into a conduit or other transfer means to a heating conduit (or other device). The pump is configured to pump the food solution from about 0.091-3.05 m/second (0.3-10 feet/second). This allows the food solution to be continuously pumped through a heating system and continuously filled into packages (as opposed to processing the food in separate batches).

In block 105, backpressure is applied to the food solution in the conduit (or other device) so that the boiling point of the liquid carrier solution where backpressure is applied is increased to a predetermined level. This allows the liquid carrier solution to be increased to a higher level than normal so that a higher amount of heat can be absorbed by the food product without the liquid carrier solution boiling.

In block 106, the pre-processed food solution is rapidly heated by volumetric heating. The volumetric heating increases the temperature of the pre-processed food product to a pre-determined temperature rapidly. The temperature of the food product during the rapid heating may be monitored to ensure that the pre-processed food product reaches the pre-determined temperature (as determined by block 108). The pre-processed food product may be heated to the pre-determined temperature in a short duration of time. In an embodiment, the time the pre-processed food product is exposed to the rapid heating process may be less than about 1-4 minutes.

As mentioned above, the rapid heating process may use a volumetric heating process via a rapid heating device which could be a device that delivers electromagnetic energy (e.g., microwave energy, radio frequency energy, ohmic energy and/or other forms of volumetric heating) to the pre-processed food solution (e.g., a microwave device connected to a microwave generator so that microwave energy is focused into the pre-processed food solution from the microwave generator). The rapid heating system is discussed in more depth later with regard to Figures 2 and 4.

The rapid heating phase (see Figure 4) may occur in a conduit extending from the pump so that the food solution is directly pumped from the food solution hopper continuously through the conduits of the rapid heating phase. The conduit may have one or more passes (which may be serpentine or straight) such that multiple exposure areas of volumetric heating occur (as illustrated in Figure 4). For example, there may be three microwave generators which deliver microwave energy transversely to the conduit in the rapid heating phase.

The pre-processed food product may be heated in a relatively short duration of time (e.g., less than or equal to 4 minutes). In an embodiment, the time the pre-processed food solution is directly exposed to the rapid heating process so that the pre-processed food product is heated to the pre-determined temperature may be less than or equal to about 3 minutes or about 2 minutes. In another embodiment, the time is less than or equal to 1 minute.

As stated above, the pre-processed food solution is heated to a predetermined temperature. This predetermined temperature may be preset or predetermined by the operator of the system such that the food product reaches such temperature and the system does not substantially heat the food product above such predefined temperature. According to one embodiment, this predetermined temperature generally relates to a temperature that a regulatory agency requires for a food product so that the food product is suitable for consumption. For example, the food solution (and/or food product) may be heated to a temperature of 125-132 degrees Celsius.

According to another embodiment, the predetermined temperature relates to a temperature that is somewhat greater than the temperature that a regulatory agency requires for a food product so that the food product is fit for consumption.

For the pre-determined temperature, the food solution and thus, the food product, exiting the rapid heating process would have minimal variation in temperature. In an embodiment, the food solution exiting the rapid heating process would not vary more than +/- 20°C. This maximum variation in temperature includes any point in the food product, including the temperature at the center of any pieces of fruit, vegetable, protein, dairy-based, and/or any consumable food in the food product.

Because the rapid heating process may use electromagnetic energy, the food solution can be rapidly heated to the predetermined temperature and held at this predetermined temperature for a relatively short period of time as compared with thermal heating systems. As used herein, the term "critical zone" for processing fruits relates to the temperature range where accelerated degradation occurs to the product quality and nutrients. For fruits, one should inactivate the native enzymes (which degrade the anthocyanins and other phenolic antioxidants in the fruits) as soon as possible, and then lower the food product's temperature out of their optimal activity temperature range (which may be substantially the above-discussed predetermined temperature). Once a fruit has been ground or sliced this degradation accelerates rapidly as the fruits' individual cells rupture and thereby release enzymes contained in the fruit. The critical zone for food may be between 10°C and 100°C according to some embodiments; however, the specific temperature is dependent on the time that the food is exposed to being heated as well as the pH of the products to be processed. Above a specific, predetermined temperature (e.g., 70°C for some fruits, 93.3°C for other fruits, etc.), the process will have killed the spoilage microorganisms and completely inactivated all product degrading enzymes, but will continue degrading nutrients thermally until the product is cooled. One should minimize the time above this temperature range as well to minimize thermal degradation but less critical once the enzymes have been inactivated. Electromagnetic devices used in the rapid heating process accomplish these goals due to the quick heating of the food product as opposed to thermal heating systems.

As briefly mentioned above, the temperature of the food solution and/or food product is monitored while being rapidly and volumetrically heated. Such monitoring may be performed using one or more temperature sensors at each desired location of the conduit. The monitored temperature at each location may be fed back into the system 228 and when the system determines that the food solution has reached the predefined temperature, the heating system 210 stops substantially heating the food solution so that the temperature of food solution does not continue to increase (or the food solution temperature is held constant).

In block 108, a determination by system 228 may be made as to whether the food product has reached the pre-determined temperature in the rapid heating process. The temperature may be monitored to determine that the pre-determined temperature has been reached as mentioned above. A control system is used to control the rapid heating process that may integrate feedback from the monitored temperature. However, if the system 228 determines that predefined temperature is not reached, the method 100 continues back to and repeats block 106.

In block 110, the food solution exiting the rapid heating system may need to be held at or near the exit temperature for a pre-determined length of time, where the exit temperature being the temperature of the food product at the moment of exiting the rapid heating system. This occurs in the food solution temperature holding system. The temperature holding system may be insulated pipes or other means for holding the food solution temperature for a predetermined time. The amount of time that the food solution temperature is kept constant is relatively short. In an embodiment, the time the pre-processed food solution is contained in the holding system may be less than about two minutes. In another embodiment, the time in the holding system is less than one minute. In some embodiments, the temperature being held in the food holding system would be for aseptic processing.

In block 118, if aseptic processing or aseptic packaging (e.g., packaging that has been substantially sterilized to 5 log reduction or more) is desired, the food solution is cooled in the food product cooling system. This food product cooling system may be a heat exchanger such as a pipe in a cooling tube, shell in tube, and/or triple tube heat exchangers. Transfer of thermal heat occurs from the food solution through the transfer system to the cooling system so that the temperature of the food solution is more rapidly cooled than if the cooling system was not present. In one embodiment, the cooling system includes a cooling tube surrounding the transfer system (or pipe) and the cooling tube has cool water running therethrough to extract heat from the food solution in the transfer system.

The cooling time may be relatively short. In an embodiment, the time the processed food solution is in the food product cooling system may be less than about 20 minutes. In an embodiment, the time in the food product cooling system is less than about seven minutes.

In block 120, a determination is made whether the product is sufficiently cooled for aseptic packaging. The temperature of the food solution may be monitored while the food solution is being cooled in the cooling system to determine that the food solution is sufficiently cooled for aseptic packaging. A control system may be used to manage, monitor, and control the cooling process. In some embodiments, the food solution is cooled to below 35°C prior to being transferred to the aseptic packaging.

In block 122, the processed food solution is filled into a flexible package after the desired cooling temperature of the food solution is reached. The flexible package could have been sterilized using aseptic techniques during the processing of the food solution. The package may be a single-serving flexible pouch, a large multiple serving container, a mass-quantity packaging.

The food solution as discussed herein is processed and placed in a package. In one embodiment, this package is aseptic so that it is substantially sterilized prior to adding the food solution.

It should be understood that the packaging need not be aseptic. For example, the package may be non-sterile, i.e., the packaging would have a sterility of less than one log reduction and a pre-sterilization process (called ultra-clean process) would be used to partially sterilize the packaging to a certain level, such as a three log reduction, two log reduction or a one log reduction.

Regardless, the package could be flexible in that to obtain the contents of the packaging, the packaging is squeezed to deform the sides of the packaging forcing the contents of the interior of the packaging out of the packaging. In an embodiment, the package is flexible and can contain less than 227g (8 ounces) of food product and greater than one ounce of food product. In one embodiment, the package contains around 90.7g (3.2 ounces) of food product. In some embodiments, the package can be squeezed to allow the food product to be consumed.

It should be understood that, in one embodiment, the food solution is cooked in a process where the food solution is packaged after the food solution is heated to a predefined temperature for a predetermined period of time to cook the food and after the food has been cooled. In this regard, the food solution may not be heated while in the packaging according to one embodiment. According to another embodiment, the food solution may be filled in the packaging prior to the rapid heating phase and then heated and cooled to cook the food product.

It should also be noted that the food solution is continuously processed. In one embodiment, this may mean continuously pumping pieces of raw food through a conduit from a large hopper to packages without interruption. As such, multiple batches of food solution are all cooked through a single continuous process in a conduit and does not need to be separated until after heating and until the food solution is ready to be placed in a package and consumed.

Figure 2 is a block schematic diagram of an exemplary system 200 of continuous processing the food product to shelf stable or refrigerated food products in accordance with some embodiments of the present invention. A food product 201 is provided to the system 200.

A food solution is created as discussed above. This may occur using a food solution system 202 which creates a water and starch/thickener solution and mixes the food product therein.

The pre-processed food solution may be added to a receiving hopper 204 or any other container. The receiving hopper 204 holds the incoming pre-processed food solution until it is pumped into the system and may hold several batches of food solution. The receiving hopper 204 assures that the system has enough pre-processed food solution to be pumped in the system so that there are minimal or no gaps in food solution provided to the system during operation, according to some embodiments.

A pump system 206 is connected to the receiving hopper 204 and may be used to convey the food solution throughout the system 200. The pump system 206 may receive pre-processed food solution from the hopper and provide means for pumping the food solution throughout the system 200. The pump system 206 may be interconnected to a transfer system 208 allowing the pump system 206 to pump the food solution through the transfer system 208.

The transfer system 208 is used to interconnect the various systems, including the pump system 206, for processing. The transfer system 208 may be a system of interconnected pipes or conduits that connect one or more of the systems together, such as the pump system 206, the receiving hopper 204, the heating and cooling systems 210, 214, the filling system 216, etc. The transfer system 208 may allow for the food solution to easily transition from one of the various systems to another within the processing system. The transfer system 208 may be a system of pipes or conduits that are substantially hollow but allow for a pumpable substance to be pumped therethrough.

A rapid heating system 210 is thermally and/or electrically communicative with the transfer system 208 and would increase the temperature of the pre-processed food product in the transfer system 208 to a pre-determined temperature, whereas the pre-determined temperature is discussed above. The temperature of the food solution may be monitored to ensure that the pre-processed food product reaches the pre-determined temperature. A computer system 228 (which is discussed below) could be used to control the temperature exiting the rapid heating system 210. The pre-processed food product may be heated to the pre-determined temperature in a short duration of time, as previously discussed.

As stated above, at least a portion, or all, of the pre-processed food solution enters the rapid heating system 210. In some embodiments, the pre-processed food solution enters the rapid heating system 210 in pumpable form, as discussed above. In some embodiments, the pre-processed food may be pre-heated prior to entering the rapid heating system 210, as stated above.

The rapid heating system 210 may include at least one volumetric source 213. Each volumetric source 213 may be a system that delivers electromagnetic energy to the pre-processed food solution at one or more locations at the conduit from an electromagnetic energy generating source. For example, the volumetric source may be a microwave generator (with a power of from about 50KW to 2MW) that generates and transfers microwave energy into the pre-processed food product from the microwave generator until the food solution or food product is heated to the above-discussed predetermined temperature. Alternatively, or additionally, the volumetric source 213 may be 1) a radio frequency ("RF') energy generator that delivers RF energy to the food product until the food solution or food product is heated to the above-discussed predetermined temperature, 2) an ohmic energy generator that delivers ohmic energy to the food product until the food solution or food product is heated to the above-discussed predetermined temperature, and/or 3) other forms of volumetric or electromagnetic heating. The electromagnetic source delivers electromagnetic energy to the food solution which allows for even and quick heating of the food product since the food product is equally distributed throughout the solution (as opposed to thermal heating which requires heating from the outside of the food product first and heating the inside of the food product last). It should be understood that a volumetric source 213 need not be required to be an electromagnetic source and could be any other source which rapidly heats the food product in a predetermined time duration.

The rapid heating system 210 also may include a temperature monitoring computer/controls system 211 which manages the volumetric source 213 for delivering electric (e.g., microwave, ohmic RF, etc.) energy to the food solution. For example, the temperature monitoring computer/controls system 211 controls the volumetric source 213 to turn it on and off for delivering energy to the food solution in the transfer system 208. Additionally, the temperature monitoring computer/controls system 211 monitors the temperature of the food solution while it is being heated by the volumetric source 213. When the food solution is heated to the predetermined temperature, the temperature monitoring computer/controls system 211 turns the volumetric source 213 off (or decreases the power thereof) so that the food product and/or food solution is not heated above such predetermined temperature.

A temperature holding system 212 may be employed to hold the temperature of the food solution at or near the exit temperature for a pre-determined length of time, wherein such exit temperature is the temperature of the food solution at the moment of exiting the rapid heating system 210. In one embodiment, according to the aseptic processing, the temperature holding system 212 may be insulated pipes or a portion of the transfer system 208 (which may be insulated, uninsulated, heated, cooled, etc.) to maintain a certain predetermined temperature of the food product for a predetermined time.

The processed food solution may be cooled in a food product cooling system 214. The food product cooling system 214 may be a tube in a tube heat exchanger that is connected with other tubes or pipes of the transfer system 208. Such tube may surround a portion (e.g., a pipe) of the transfer system 208. The food product cooling system 214 may be used for the aseptic packaging process to cool the processed food product in the transfer system 208, as previously discussed with regard to blocks 118-120.

A filling system 216 is used to transfer the food solution into the package 240. The filling system 216 may fill a pre-determined amount of food solution into the package 240. The package size may be virtually any size. Possible sizes of the packaging include but are not limited to 3 ounces, 8 ounces, 16 ounces, 1 liter, 2 liter, 5 liter, 55 gallon drums, 1 ton totes, tanker cars and other sizes. Additionally, the package 240 may be an aseptic (e.g., sterile) package or any other package.

As mentioned above, the system 200 delivers the processed food solution into the package 740 so that the processed food product is contained in the package 240. As previously discussed the package 240 may contain the food solution which may be a particulate food having processed raw food pieces (e.g., processed whole corn kernels, processed whole green beans, and other processed whole vegetables and fruits), food chunks and/or may have food puree. The package containing the food solution is sealed for later use and for storing on a store shelf.

A computer/controls system 228 may be used to manage or control any aspects of the system 200. The computer/controls system 228 includes a processor and memory. Input and output devices are also included in the computer/controls system 228, such as a monitor, keyboard, mouse, etc. The computer/controls system 228 includes various modules, which includes computer code instructions to control the processor and memory. Any steps in methods 100 and 300 (Figure 3) may be performed by the processor of the computer/controls system 228. The module for rapid heating controls may control the rapid heating system 210. The module for filling the package manages the filling of the package with processed food solution. The module for pumping food solution through the transfer system controls the pump system 206 and other devices so that the food solution (whether unprocessed or processed) passes through the transfer system 208 from the hopper 204, through the heating system 210, through the holding system 212 and all the way until filling the package 240. The module for cooling product controls cooling the food solution after the food solution has been processed, such as by actually providing cooling means and applying such cooling means while monitoring the temperature of the food solution until the food solution is cooled. A module to make the solution (e.g., water and starch/thickener mixture) for the food solution controls the mixture of ingredients (e.g., water 215 and starch/thickener 216) to make the food solution. Such module determines when the food solution is in a sufficient mixture so that the food product will be buoyantly suspended equally throughout the solution.

Other modules may also be included in the computer/controls system 228 and may work with any other device of the system 200.

In some embodiments, the processed food solution may be able to be stored on the shelf without refrigeration for six months or longer. In other embodiments, the processed food solution may be stored under refrigeration conditions for three months or longer.

In some embodiments, the processed food solution may maintain some or a majority of the nutrients of the pre-processed food solution. These include but are limited to antioxidants, anthocyanins, Vitamin C, Vitamin B, Vitamin A, beta-carotene, bromelain, lycopene, and quercetin.

The processed food solution is contained in the package. The package containing the food solution is sealed. In one embodiment, the sealed package contains less than eight ounces and greater than one ounce of food solution. As such, both the solution and food solution that were processed are both disposed in the package.

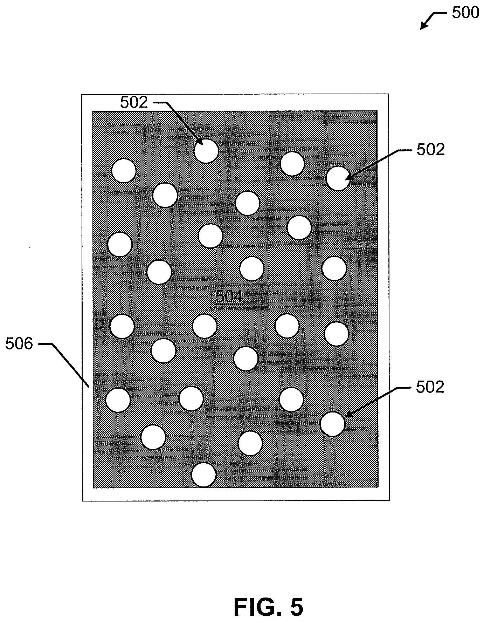

Figure 3 illustrates an example of a food product that is processed through the system according to one embodiment. As previously discussed, the food product may be fruits or vegetables. In Figure 3, the food product is whole kernels of corn. The corn kernels are first cut from the cob and placed in a hopper (block 302). A solution is then created as previously discussed with a carrier solution (e.g., starch in water mixture) so that the kernels of corn are suspended equally in the solution. The kernels of corn are then added to the solution in block 304. As illustrated in Figure 5, the liquid carrier solution 504 is illustrated in Figure 5 as equally distributing the food product 502 buoyantly in the solution 504. A container or hopper 506 holds the pre-processed food solution. It should be understood that only a few pieces of the food product are illustrated, but it should be known that hundreds, thousands, or more pieces may be equally distributed in the liquid carrier solution within the container or hopper.

At block 306, a pump continuously pumps the corn solution from the food hopper to a conduit. Backpressure is applied to the conduit so that the corn solution has a higher pressure (e.g., a pressure between 138-483 kPa (20-70 psig) and thus a higher boiling point than if the corn solution is exposed to ambient pressure. The backpressure is applied at the end of the conduit towards the pump.

In block 308, the corn solution is in the conduit and while backpressure is applied, three microwave generators deliver volumetric heating (e.g., RF heating, microwave heating, Ohmic heating, etc.) at five points along the pressurized conduit so that the food solution receives such volumetric heating. The food product is evenly distributed and suspended in the solution and thus, the even microwave heating is equally distributed to the corn. Both the corn and the solution is heated by the microwave generator. The corn absorbs heat from the heated water/starch solution but also may receive microwave energy from the source. The microwave generators have waveguides which are connected with the conduit to deliver the microwave energy from the microwave source to the conduit. The waveguide of the microwave source may be split using a waveguide split so as to deliver microwave energy to multiple locations on the conduit.

In block 309, the temperature of the corn kernels and/or corn solution is monitored using temperature sensors. The temperature sensors may optically determine the temperature of the corn solution. Additionally, a device may be inserted into the corn solution to estimate the temperature of the food products suspended in the solution. A computing device determines whether the corn kernels or corn solution has reached a predefined temperature. If not, the method 300 returns back to 308; otherwise, method 300 may proceed to block 311.

In block 311, the temperature of the corn solution is held at a predefined temperature using an insulated pipe. This is done after the rapid heating process but before packaging of the processed corn solution.

In block 318, the corn solution is cooled as previously described. Once it is determined that the corn solution has cooled to a desired temperature (block 320), the corn solution is then filled into the individual aseptic packages (322).

It should be understood that the processes of 302-322 happen continuously and without interruption so that whatever amount of food product is placed in the hopper, this food is then pumped out and heated continuously until the hopper is emptied.

Figure 4 is a block schematic diagram of an exemplary system of continuous processing of food products using volumetric heating in accordance with some embodiments of the present invention. As illustrated the product and solution is added to the food hopper. The food solution is illustrated by the shading in Figure 4. The food solution enters a pump which pumps the food solution through the rapid heating phase. During such rapid heating phase, the food solution is exposed to multiple points of volumetric heating and the temperature is measured at several locations along the conduit. It should be noted that any electromagnetic energy that is not absorbed by the food solution may go into a water load or be routed back to the conduit (either by a conductive termination plate or back to another location on the conduit). Regardless, while the food solution is being heated, a backpressure device is illustrated as applying pressure back to the pump. Then, the food solution enters the temperature holding conduit and thereafter the cooling system. After the food solution is cooled, it is packaged using a packaging system. Figure 4 illustrates the packaging occurring on a conveyer belt so that the packaging system can continuously fill the packages in an assembly-line fashion as illustrated. The filled packages are then sealed and then may be consumed or placed on a store shelf.

It should be noted that any of the elements of the methods may be applicable to any other elements of any of the other methods. And as such, the blocks and related description apply to any elements.

The flowcharts and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Although specific embodiments have been illustrated and described herein, those of ordinary skill in the art appreciate that any arrangement which is calculated to achieve the same purpose may be substituted for the specific embodiments shown and that the invention has other applications in other environments. This application is intended to cover any adaptations or variations of the present invention. The following claims are in no way intended to limit the scope of the invention to the specific embodiments described herein.

## Claims

1. A method for continuous processing food product, the method comprising:
providing a food product and a solution, the food product comprising chunks of food, the solution comprising water and at least one thickener other than the chunks of food, a ratio of the water to the at least one thickener being selected to allow the food product to be buoyantly suspended in the solution;
mixing the food product and solution to form a pumpable food solution in which the chunks of food are equally distributed;
rapid heating, after the mixing, the food solution using at least one of a microwave generator, an RF source, or an Ohmic source; and
filling a package with the processed food solution.

2. The method of claim 1, wherein said thickener is starch.

3. The method according to claim 1 or 2, wherein said ratio is between 0.5% to 2.5% starch to water solution.

4. The method of any of the claims from 1 to 3, wherein the food product comprises kernels of corn.

5. The method of any of the claims from 1 to 4, wherein the food product comprises raw food.

6. The method of any of the claims from 1 to 5, wherein the package comprises a flexible package.

7. The method of any of the claims from 1 to 6, further comprising continuously pumping the food product throughout a conveying system that is exposed, at least partially, to the heating.

8. The method of claim 7, wherein the continuously pumping the food product comprises continuously pumping the food product from a hopper to a container through a system that exposes the food product to an output of at least one of a microwave generator, an RF source, or an Ohmic source so that the food product continuously moves through the conveying system.

9. The method of claim 1, further comprising applying backpressure to the food solution to increase a boiling point of the food solution.

10. The method of claim 1, further comprising monitoring, during the heating, a temperature of the food solution.

11. The method of claim 10, further comprising holding, after the heating and before the filling, the food solution at a first pre-defined temperature.

12. The method of claim 11, further comprising cooling, after the holding and before the filling, the food solution to a second predefined temperature.

13. The method of claim 1, wherein the heating comprises passing the food solution through multiple microwave generators.

14. A food heating and processing system comprising:
a device for providing a food product and a solution, the food product comprising chunks of food, the solution comprising water and at least one thickener other than the chunks of food;
a controller that determines when a food solution comprising the food product and the solution is in a sufficient mixture such that the food product is buoyantly suspended equally throughout the solution;
a mixer that mixes the food product and solution so the chunks of food are equally distributed in the solution forming a pumpable food solution;
a microwave generator, an RF source, or an Ohmic source that rapidly heats the mixed food solution using volumetric energy;
a backpressure device for applying backpressure to the food solution to increase a boiling point of the food solution; and
a filler that receives the processed food solution and fills a package with the processed food solution.

15. The food heating and processing system of claim 14, further comprising a conveying system that continuously pumps the food product from the device for providing the food product and solution to the heating source.

## Patentansprüche

1. Verfahren zur kontinuierlichen Verarbeitung von Lebensmittelprodukt, wobei das Verfahren Folgendes beinhaltet:
Bereitstellen eines Lebensmittelprodukts und einer Lösung, wobei das Lebensmittelprodukt Brocken von Lebensmittel beinhaltet, wobei die Lösung Wasser und mindestens ein Verdickungsmittel abgesehen von den Brocken von Lebensmittel beinhaltet wobei ein Verhältnis des Wassers zu dem mindestens einen Verdickungsmittel ausgewählt ist, um dem Lebensmittelprodukt zu ermöglichen, in der Lösung schwimmend suspendiert zu sein;
Mischen des Lebensmittelprodukts und der Lösung, um eine pumpfähige Lebensmittellösung zu bilden, in der die Brocken von Lebensmittel gleichmäßig verteilt sind;
schnelles Erhitzen, nach dem Mischen, des Lebensmittelprodukts unter Verwendung von mindestens einem Mikrowellengenerator, einer HF-Quelle, oder einer ohmischen Quelle; und
Füllen einer Packung mit der verarbeiteten Lebensmittellösung.

2. Verfahren gemäß Anspruch 1, wobei das genannte Verdickungsmittel Stärke ist.

3. Verfahren gemäß Anspruch 1 oder 2, wobei das genannte Verhältnis zwischen 0,5 % und 2,5 % Stärke zu Wasserlösung ist.

4. Verfahren gemäß einem der Ansprüche 1 bis 3, wobei das Lebensmittelprodukt Körner von Mais beinhaltet.

5. Verfahren gemäß einem der Ansprüche 1 bis 4, wobei das Lebensmittelprodukt rohes Lebensmittel beinhaltet.

6. Verfahren gemäß einem der Ansprüche 1 bis 5, wobei die Packung eine flexible Packung beinhaltet.

7. Verfahren gemäß einem der Ansprüche 1 bis 6, das ferner das kontinuierliche Pumpen des Lebensmittelprodukts durch ein Fördersystem beinhaltet, das mindestens teilweise dem Erhitzen ausgesetzt ist.

8. Verfahren gemäß Anspruch 7, wobei das kontinuierliche Pumpen des Lebensmittelprodukts das kontinuierliche Pumpen des Lebensmittelprodukts von einem Trichter zu einem Behälter durch ein System beinhaltet, das das Lebensmittelprodukt einem Ausgang von mindestens einem eines Mikrowellengenerators, einer HF-Quelle oder einer ohmschen Quelle aussetzt, sodass sich das Lebensmittelprodukt kontinuierlich durch das Fördersystem bewegt.

9. Verfahren gemäß Anspruch 1, das ferner das Anwenden eines Gegendrucks an der Lebensmittellösung beinhaltet, um einen Siedepunkt der Lebensmittellösung zu erhöhen.

10. Verfahren gemäß Anspruch 1, das ferner das Überwachen, während des Erhitzens, einer Temperatur der Lebensmittellösung beinhaltet.

11. Verfahren gemäß Anspruch 10, das ferner das Halten, nach dem Erhitzen und vor dem Füllen, der Lebensmittellösung auf einer ersten vordefinierten Temperatur beinhaltet.

12. Verfahren gemäß Anspruch 11, das ferner das Abkühlen, nach dem Halten und vor dem Füllen, der Lebensmittellösung auf eine zweite vordefinierte Temperatur beinhaltet.

13. Verfahren gemäß Anspruch 1, wobei das Erhitzen das Leiten der Lebensmittellösung durch mehrere Mikrowellengeneratoren beinhaltet.

14. Erhitzungs- und Verarbeitungssystem für Lebensmittel, das Folgendes beinhaltet:
eine Vorrichtung zum Bereitstellen eines Lebensmittelprodukts und einer Lösung, wobei das Lebensmittelprodukt Brocken von Lebensmittel beinhaltet, wobei die Lösung Wasser und mindestens ein Verdickungsmittel abgesehen von den Brocken von Lebensmittel beinhaltet;
eine Steuereinheit, die bestimmt, wann eine Lebensmittellösung, die das Lebensmittelprodukt und die Lösung beinhaltet, in einer ausreichenden Mischung ist, sodass das Lebensmittelprodukt in der ganzen Lösung gleichmäßig schwimmend suspendiert ist;
ein Mischer, der das Lebensmittelprodukt und die Lösung mischt, sodass die Brocken von Lebensmittel gleichmäßig in der Lösung verteilt sind, wodurch eine pumpfähige Lebensmittellösung gebildet wird;
ein Mikrowellengenerator, eine HF-Quelle oder eine ohmsche Quelle, die die gemischte Lebensmittellösung unter Verwendung von volumetrischer Energie schnell erhitzt;
eine Gegendruckvorrichtung zum Anwenden von Gegendruck an der Lebensmittellösung, um einen Siedepunkt der Lebensmittellösung zu erhöhen; und
einen Füller, der die verarbeitete Lebensmittellösung empfängt und eine Packung mit der verarbeiteten Lebensmittellösung füllt.

15. Erhitzungs- und Verarbeitungssystem für Lebensmittel gemäß Anspruch 14, das ferner ein Fördersystem beinhaltet, dass das Lebensmittelprodukt von der Vorrichtung zum bereitstellen des Lebensmittelprodukts und der Lösung kontinuierlich zu der Erhitzungsquelle pumpt.

## Revendications

1. Procédé de traitement continu d'un produit alimentaire, le procédé comprenant :
la fourniture d'un produit alimentaire et d'une solution, le produit alimentaire comprenant des morceaux d'aliment, la solution comprenant de l'eau et au moins un épaississant autre que les morceaux d'aliment, un rapport de l'eau et de l'au moins un épaississant étant sélectionné de manière à permettre la mise en suspension par flottaison du produit alimentaire dans la solution ;
le mélange du produit alimentaire et de la solution pour former une solution alimentaire pouvant être pompée dans laquelle les morceaux d'aliment sont uniformément répartis ;
le chauffage rapide, après le mélange, de la solution alimentaire en utilisant au moins l'un d'un générateur micro-ondes, d'une source RF, ou d'une source ohmique ; et
le remplissage d'un paquet avec la solution alimentaire traitée.

2. Procédé selon la revendication 1, dans lequel ledit épaississeur est l'amidon.

3. Procédé selon la revendication 1 ou 2, dans lequel ledit rapport est compris entre 0,5 % à 2,5 % d'amidon avec la solution d'eau.

4. Procédé selon l'une quelconque des revendications 1 à 3, dans lequel le produit alimentaire comprend des grains de maïs.

5. Procédé selon l'une quelconque des revendications 1 à 4, dans lequel le produit alimentaire comprend un aliment cru.

6. Procédé selon l'une quelconque des revendications 1 à 5, dans lequel le paquet comprend un paquet souple.

7. Procédé selon l'une quelconque des revendications 1 à 6, comprenant en outre le pompage continu du produit alimentaire à travers un système d'acheminement qui est exposé, au moins partiellement, au chauffage.

8. Procédé selon la revendication 7, dans lequel le pompage continu du produit alimentaire comprend le pompage continu du produit alimentaire depuis une trémie jusqu'à un contenant à travers un système qui expose le produit alimentaire à une sortie d'au moins l'un d'un générateur micro-ondes, d'une source RF, ou d'une source ohmique de telle sorte que le produit alimentaire se déplace continûment à travers le système d'acheminement.

9. Procédé selon la revendication 1, comprenant en outre l'application d'une contrepression à la solution alimentaire pour augmenter un point d'ébullition de la solution alimentaire.

10. Procédé selon la revendication 1, comprenant en outre le contrôle, durant le chauffage, d'une température de la solution alimentaire.

11. Procédé selon la revendication 10 comprenant en outre le maintien, après le chauffage et avant le remplissage, de la solution alimentaire à une première température prédéfinie.

12. Procédé selon la revendication 11, comprenant en outre le refroidissement, après le maintien et avant le remplissage, de la solution alimentaire à une seconde température prédéfinie.

13. Procédé selon la revendication 1, dans lequel le chauffage comprend le passage de la solution alimentaire à travers de multiples générateurs micro-ondes.

14. Système de chauffage et de traitement d'aliment comprenant :
un dispositif pour fournir un produit alimentaire et une solution, le produit alimentaire comprenant des morceaux d'aliment, la solution comprenant de l'eau et au moins un épaississant autre que les morceaux d'aliment ;
un contrôleur qui détermine quand une solution alimentaire comprenant le produit alimentaire et la solution est suffisamment mélangée de telle sorte que le produit alimentaire soit uniformément mis en suspension par flottaison à travers la solution ;
un mélangeur qui mélange le produit alimentaire et la solution de telle sorte que les morceaux d'aliment soient uniformément répartis dans la solution formant une solution alimentaire pouvant être pompée ;
un générateur micro-ondes, une source RF, ou une source ohmique qui chauffe rapidement la solution alimentaire mélangée en utilisant une énergie volumétrique ;
un dispositif de contrepression pour appliquer une contrepression à la solution alimentaire afin d'augmenter un point d'ébullition de la solution alimentaire ; et
un dispositif de remplissage qui reçoit la solution alimentaire traitée et remplit un paquet avec la solution alimentaire traitée.

15. Système de chauffage et de traitement d'aliment selon la revendication 14, comprenant en outre un système d'acheminement qui pompe continûment le produit alimentaire provenant du dispositif pour fournir le produit alimentaire et la solution à la source de chauffage.
